# EUROPEAN PATENT APPLICATION

(11) **EP 2 515 205 A2**
(43) Date of publication of application: **24.10.2012**
(21) Application number: 12163182.4
(22) Date of filing: 04.04.2012
(51) Int. Cl.: G06F 3/023

(54) **Retrieval of a previous character associated to a key in an electronic device**

(30) Priority: 20.04.2011 IN CH13602011
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Kumbar, Shivanand, 560095 Karnataka (IN)

(57) **Abstract**

The invention proposes a method to retrieve a character corresponding to previous pressing of a key. Here the key is from a keypad of an electronic device like a mobile phone. As the number of physical keys are limited in the electronic device, each key (K1 to K12) is associated with a set of characters. Pressing of same key repetitively within a predefined time, generates different characters, in a predefined sequence an in a cyclic manner. If the user by mistake does not stop after required number of pressings and continues, a different character is generated which may not be what user intended to enter. The invention provides a method wherein a pressing of a soft key on the key pad retrieves the previously generated character. Thus the user does not have to restart the cycle to enter the intended character.

## Description

### Field of Invention:

The invention relates to retrieval of a character among a group of characters associated to a key of a keypad, such as telephone keypad or keypad of a navigation device.

### BACKGROUND OF THE INVENTION:

Typically a telephone dialing keypad comprises a set of 10 to 12 keys to which digits 0 to 9 and characters 'a' to 'z', "*" and "#" are assigned. In such keypads, each key normally represents a set of three or four characters. Selection of a particular character from the set is established by pressing the corresponding key in a predefined sequence.

An US patent 5991396 discloses a method for the selection of characters from a set of characters assigned to the keys of the keypad by multiple pressings of a key, such that the first pressing of a key selects a first character of the set, second pressing of the same key results in the selection of a second character of the set and so on.

Pressing of the key again within a time duration leads to the selection of a next character of the set associated with the key. Expiry of the time duration following the last key pressing will result in displaying the selected character and making the keypad ready for further inputs.

### OBJECT OF THE INVENTION:

The invention proposes a method to retrieve a character corresponding to previous pressing of a key, the said key adapted to provide different characters in a predetermined sequence for each pressing of the said key.

### ADVANTAGES OF THE INVENTION:

The method helps the user to retrieve a previous character in an easier and efficient way.

### BRIEF DESCRIPTION OF THE DRAWINGS:

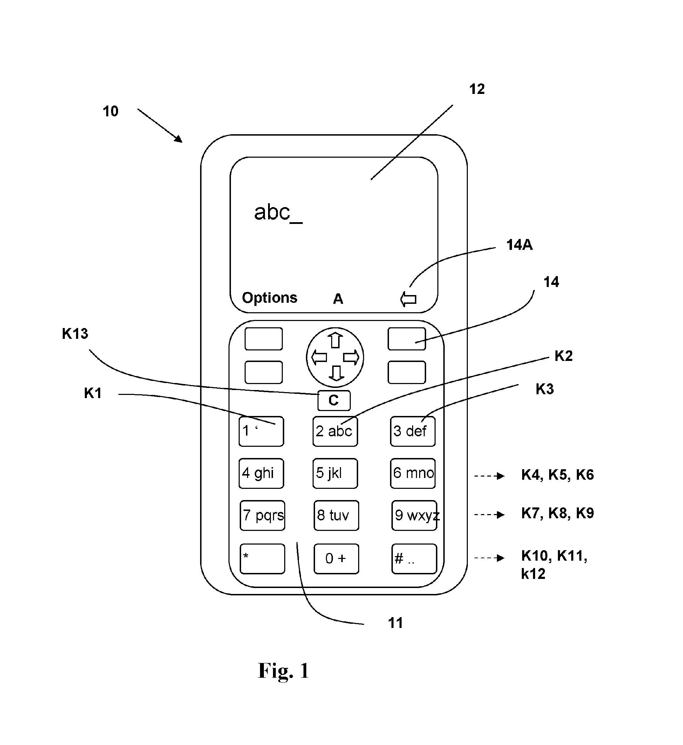

- Figure 1: Shows the schematic of the invention

### DESCRIPTION OF THE INVENTION:

Shown in fig. 1 is an electronic device 10 with a keypad 11, the keypad 11 comprising the keys K1 to K12. The electronic device may be a telephone, a navigation device or any other device where each physical key is associated with a set of characters. In this document the term character includes characters a to z, A to Z, digits 0 to 9 and other special characters like *, # etc.

As the number of keys are limited, each key (K1 to K12) is associated with a set of characters. The keypad is connected to a display 12. Pressing of a key once, results in a display of a first character from the set of characters associated to the pressed key. Pressing of the same key again within a predefined time duration results in the display of the next character from the set. The characters displayed for the repetitive pressing of the key are in a cyclic manner with a predefined sequence.

Normally the position of the character to be entered is displayed on the display by a cursor. The cursor may be in the form of a line when no character is selected. Once a key is pressed, the first character from the set associated to the key is displayed. The cursor may take the form of the displayed character, for a predefined duration. If the same key is pressed again during this predefined time period, the displayed character is overwritten with next character from the set associated with the key.

In fig. 1 the characters assigned to each of the keys are shown engraved on the key. For example the key K2 is assigned with characters '2', 'a', 'b' and 'c'. In a menu where user has to enter a name for example, the pressing of the key K2 for the first time results in displaying 'a' on the display. The cursor takes the shape of the character 'a' and blinks for a predefined duration at the position of 'a'. If the user presses the same key when the cursor on 'a' is still blinking, then the character 'a' is replaced by 'b' and cursor on 'b' starts blinking on the display. If the user presses the same key once again when the cursor on character 'b' is blinking, then 'b' is replaced with 'c'. If user does not press any key within the predefined time, then the cursor changes to some other shape, for example, a small line, and blinks at a position next to the last entered character. Now if the user enters the same key, then the first character from the set assigned to the key is displayed on the display. Thus selection of character goes through a predefined sequence in a cyclic manner.

In the prior arts, when the user is pressing the same key repetitively to select an intended character from the sequence and if by mistake he does not stop at the intended character but continues with an extra press of the key, then the next character from the set is displayed. At this point of time, the user does not have option to retrieve the last character. If he has to select the last entered character, he has to clear the character by pressing a particular key, for example K13, and start once again from the first character assigned to the key or keep pressing the same key so that the required character is displayed in the next cycle after all the characters associated with the key are displayed.

This is not an efficient way of selecting characters because user has to clear the present character or press again the same key repetitively to display the intended character in the next cycle.

The present invention overcomes this disadvantage by providing a special key to retrieve the character which was corresponding to the previous press of the key.

The working of the invention is explained with an example below:
Assume the user activates a menu where he is expected to enter a set of characters, for example a name. The menu is shown in the display in fig. 1. The menu shown in fig. 1 is only for reference and the actual menu may vary in different devices. The menu shown in fig.1 has a tool bar where some soft keys are displayed. Generally a soft key is referred to a key from the keypad which has different functionality in different menus. The soft keys provided in the menu in fig. 1 are 'Options', 'A' and a Retrieval key. These soft keys are normally assigned to the nearby physical keys. The Retrieval key is shown according to the invention. The 'Options' soft key may be used to store, delete the entries. The soft key 'A' may be used to toggle between normal keyboard and a predictive keyboard. Predictive keyboard is one where the device predicts the entries based on few inputs from the user.

The soft key 14 has a corresponding icon 14A shown on display in the menu bar. In the above menu, this icon 14A is displayed as ⇐, indicating a back arrow. This soft key 14 has the functionality to retrieve the character corresponding to the last pressing of the key.

Suppose the user has to select the character 'c'. For this, the user has to press the key K2 three times, each time within a predefined time duration. When the user presses the key K2 for the first time, the character 'a' is displayed and the cursor on 'a' starts blinking for a predefined time duration. User has to press same key again within this time duration. Then character 'a' is overwritten with 'b'. Then user has to press same key within the predefined time duration. Now character 'b' is overwritten with 'c'. As the predefined time duration for each pressing is relatively quite short, the user has to do the pressing of the key quite fast. In the process, there is possibility that user may overshoot by pressing one extra time. In the above case, if the user overshoots by mistake by pressing the key one extra time, the character selected will be '2' instead of 'c'. At this point of time, user can press the soft key 14 to go back to the character 'c'. By pressing the soft key 14, the previous character which was displayed and overwritten is retrieved and displayed.

Thus the invention provides an efficient way of retrieving the previous character. Without the invention, for the above case, when the user who wanted to select a character 'c' overshoots by one extra pressing of the key K2, then the selected character 'c' is overwritten by '2'. To go back to 'c', the user had to clear the character '2', then restart the whole process of selecting the character 'c' by repetitively pressing the key K2 which will cycle again through 'a' then 'b' then 'c'. The user has to stop exactly at 'c'. This had lead to lot of extra pressing of key by user and also cumbersome to keep track of the character required and the number of times the key was pressed.

The invention removes the disadvantage from the prior arts and provides an easier way of selecting characters using a keypad where each key is associated to a set of characters.

The activation of a timer for each pressing of the key and deactivating the same is already known in prior arts hence not explained in this document.

## Claims

1. An electronic device (10) comprising a keypad (11) and a display (12), the said keypad (11) having at least a first key (K2) adapted to provide a different output in a predetermined sequence for each pressing of the said first key (K2) to the said display (12), the said electronic device (10) provided with a second key (14) to retrieve an output which was provided by the first key (K2) for the previous pressing of the said first key (K2).

2. An electronic device according to claim 1 wherein the said output is a character between 'a' to 'z'.

3. An electronic device according to claim 1 wherein the said output is a character between 'A' to 'Z'.

4. An electronic device according to claim 1 wherein the said output is a character between '0' to '9'.

5. An electronic device according to claim 1 wherein the said output is one of special characters.

6. An electronic device according to claim 1 wherein the said second key (14) is a soft key having different functionalities in different menus.

7. An electronic device according to claim 1 wherein pressing of the said first key (K2) starts a timer with a predefined time duration.

8. An electronic device according to claim 1 wherein the pressing of the second key (14) within the said predefined time duration results in retrieval of an output which was previously displayed.

9. A method to retrieve a previous character associated with a first key (K2), the said method comprising the steps:
- detecting a pressing of a first key (K2) and providing a different output in a predetermined sequence for each pressing of the said first key (K2) to a display means (12)
- detecting a pressing of a second key (14) and retrieving an output which was provided by the first key (K2) for the previous pressing of the said first key (K2)
